**Europäisches Patentamt**

**European Patent Office**

**Office européen des brevets**

(19)

(11) Veröffentlichungsnummer: **0 134 997**
**A2**

(12) **EUROPÄISCHE PATENTANMELDUNG**

(21) Anmeldenummer: **84108083.1**

(22) Anmeldetag: **10.07.84**

(51) Int. Cl.⁴: **G 06 K 9/60**

(30) Priorität: **15.07.83 DE 3325645**

(43) Veröffentlichungstag der Anmeldung:
**27.03.85 Patentblatt 85/13**

(84) Benannte Vertragsstaaten:
**AT CH DE FR GB IT LI**

(71) Anmelder: **Siemens Aktiengesellschaft**
**Berlin und München Wittelsbacherplatz 2**
**D-8000 München 2(DE)**

(72) Erfinder: **Scherl, Wolfgang, Dipl.-Ing.**
**Kafkastrasse 54**
**D-8000 München(DE)**

(54) **Verfahren zur automatischen Schriftarterkennung ohne Vorwissen über den Textinhalt mit Hilfe einer Beschreibung der Textvorlage durch Deskriptoren.**

(57) Nach dem Bestimmen von Deskriptoren für die einzelnen Schriftzeichen werden in zwei Teilverfahren Such- bzw. Bewertungsvorgänge abgewickelt, bei denen nach Serifen gesucht wird und eine ggf. vorhandene Schräglage erkannt und winkelmäßig in bezug auf die Orientierung der Textzeilen bewertet werden. Die Ergebnisdaten aus den Teilverfahren werden zusammen zum Bestimmen der Schriftart des untersuchten Textes verarbeitet.

FIG 1

EP 0 134 997 A2

SIEMENS AKTIENGESELLSCHAFT
Berlin und München

Unser Zeichen
VPA 83 P 1 4 8 6 E

0134997

## Verfahren zur automatischen Schriftarterkennung ohne Vorwissen über den Textinhalt mit Hilfe einer Beschreibung der Textvorlage durch Deskriptoren

Um die Schriftart von gedrucktem Text automatisch bestimmen zu können, wird ein Verfahren vorgeschlagen, das ohne Kenntnis des Textinhalts eine Bestimmung der Schriftart erlaubt. Hierzu werden Teilstrukturen und Kriterien, die vielen Schriftzeichen einer bestimmten Schriftart gemeinsam sind, erkannt und ausgewertet. Beispiele derartiger Kriterien sind das Vorhandensein bzw. Fehlen von Serifen in einem Textstück sowie der mittlere Neigungswinkel der Schriftzeichen. Dem Verfahren liegt ein Verfahren zur Extraktion von Deskriptoren, vorzugsweise zur Darstellung von Druckvorlagen in Form von größen- und drehlagenunabhängigen Bogenstrukturen zum Zwecke einer Dokumentenanalyse, insbesondere zur Schriftzeichenerkennung, nach Patentanmeldung P 32 38 706 zugrunde.

Ein Verfahren der eingangs genannten Art ist bisher nicht bekannt geworden.

Der Erfindung liegt die Aufgabe zugrunde, ein derartiges Verfahren zu schaffen.

Die Erfindung beruht auf der Erkenntnis, daß die Kenntnis von Deskriptoren, wie sie weiter oben erwähnt wurden, eine Möglichkeit zum Auffinden von Serifen, nämlich den kleinen Ansatz- und Begrenzungsstrichen der Buchstaben -vornehmlich bei Antiquaschriften vorhanden sowie zum Erkennen und Bewerten der winkelmäßigen Orientierung der Schriftzeichen in bezug auf die Textzeilen, nämlich eine ggf. vorhandene Schräglage der Schriftzeichen, bietet.

Pap 1 The - 15.07.1983

Zur Lösung der Aufgabe wird ein Verfahren gemäß dem Oberbegriff des Patentanspruchs 1 vorgeschlagen, das erfindungsgemäß durch die in dessen kennzeichnenden Teil angegebenen Merkmale ausgestaltet ist.

Vorteilhafte Weiterbildungen sind durch die in den Unteransprüchen angegebenen Merkmale gekennzeichnet.

Die vorliegende Erfindung wird im folgenden anhand mehrerer, Ausführungsbeispiele für die Erfindung betreffender Figuren im einzelnen beschrieben.

Fig. 1 zeigt ein schematisches Flußdiagramm für den generellen Ablauf des Verfahrens, das zwei Teilverfahren, nämlich zum Auffinden von Serifen und zum Auffinden einer Schräglage enthält.

Fig. 2 zeigt ein Flußdiagramm für ein Teilverfahren zum Auffinden von Serifen.

Fig. 3 zeigt ein Flußdiagramm für ein Teilverfahren zum Auffinden einer Schräglage.

Fig. 4 zeigt eine Deskriptor-Konfiguration für eine ideale Serife.

Fig. 5 zeigt ein ideales Deskriptor-Modell einer Serife (Referenzmuster) sowie eine Zuordnung zu den Deskriptoren einer realen, gestörten Serife.

Fig. 6 zeigt ein sog. drehfreies Deskriptormodell einer Serife.

Fig. 7 zeigt die Zuordnung der Deskriptoren einer Geraden zu einem Indexfeld.

Fig. 8 zeigt extrahierte Geraden vor einer Umgebungsbewertung.

Fig. 9 zeigt eine auszugsweise Darstellung eines in der Schriftart "Pica" gedruckten oder maschinegeschriebenen Textes.

0134997

Fig. 10 zeigt eine Darstellung der durch das Verfahren aus dem Textauszug gemäß Fig. 9 ermittelten Serifen und der aufrechten Geraden.

Fig. 11 zeigt eine auszugsweise Darstellung eines in der Schriftart "Courier-Italic" gedruckten oder maschinegeschriebenen Textes.

Fig. 12 zeigt eine Darstellung der durch das Verfahren aus dem Textauszug gemäß Fig. 11 ermittelten Serifen und der aufrechten Geraden.

Fig. 13 zeigt eine auszugsweise Darstellung eines in der Schriftart "Letter Gothic" gedruckten oder maschinegeschriebenen Textes.

Fig. 14 zeigt eine Darstellung der durch das Verfahren aus dem Textauszug gemäß Fig. 13 ermittelten aufrechten Geraden.

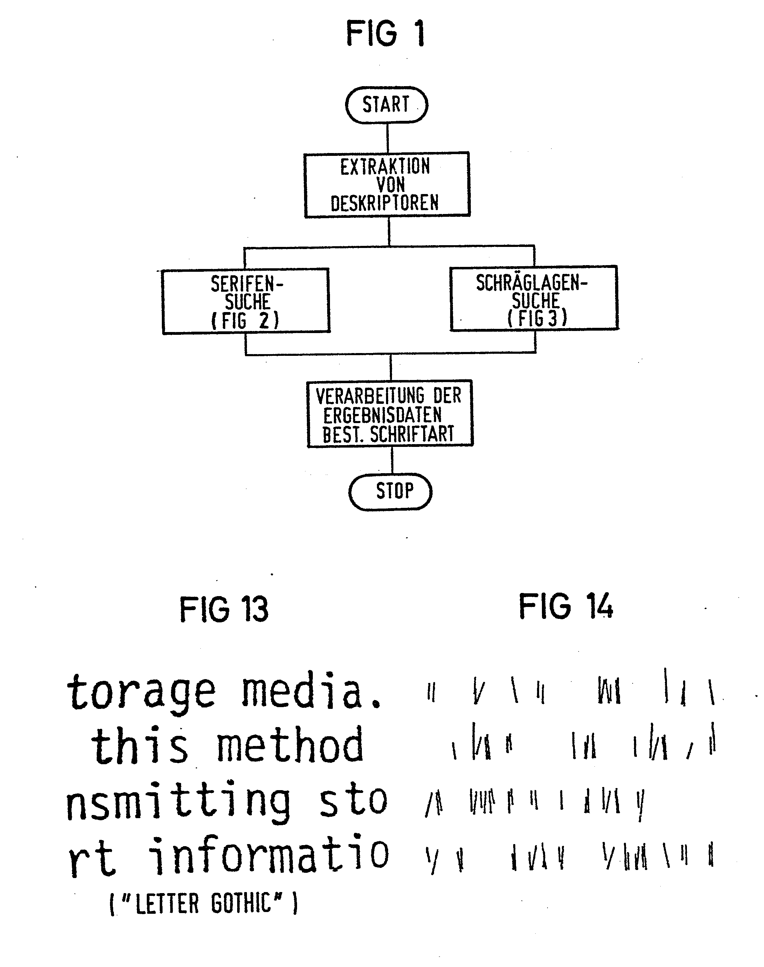

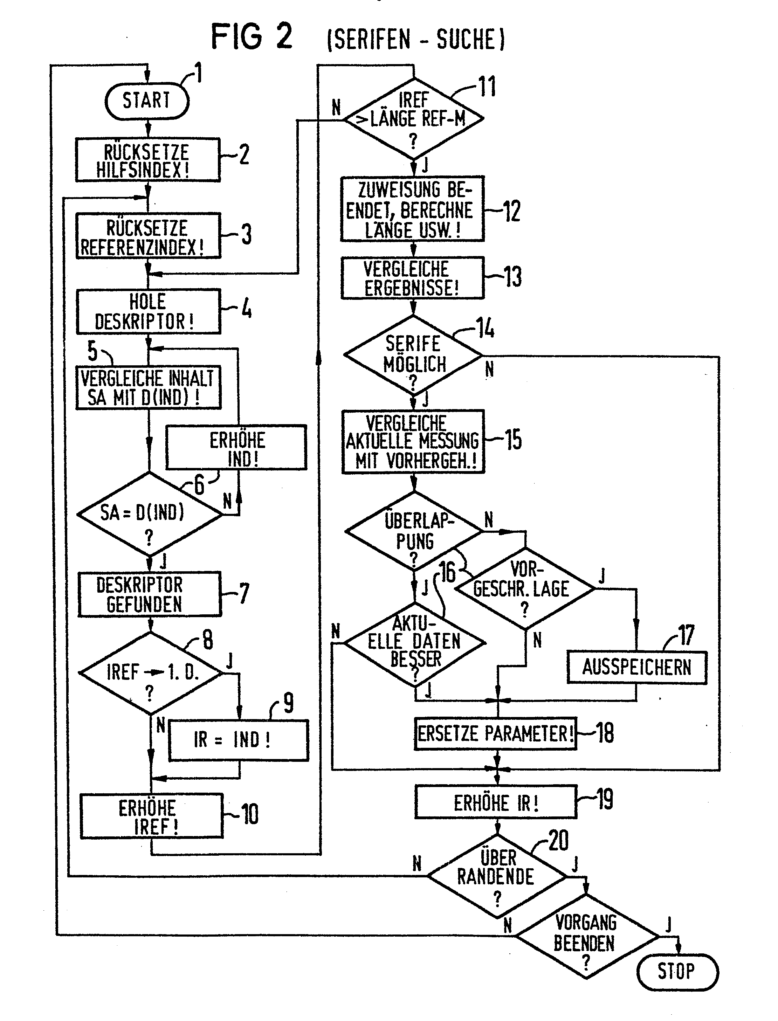

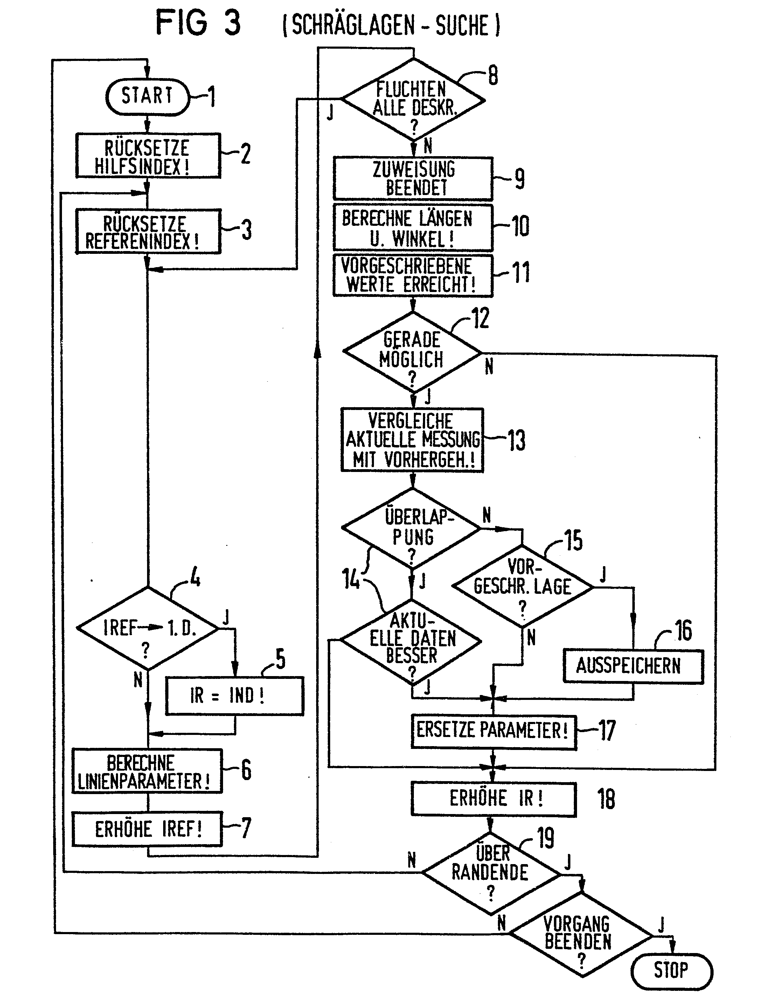

Wie bereits erläutert, zeigt Fig. 1 ein schematisches Flußdiagramm für den generellen Ablauf des Verfahrens, das zwei Teilverfahren, nämlich zum Auffinden von Serifen und zum Auffinden einer Schräglage enthält. Fig. 2 und Fig. 3 zeigen jeweils ein Flußdiagramm für den Ablauf des Teilverfahrens zum Auffinden von Serifen bzw. für den Ablauf des Teilverfahrens zum Auffinden einer Schräglage. Wie ebenfalls bereits erläutert, geht das erfindungsgemäße Verfahren von einem Verfahren nach Patentanmeldung P 32 38 706 aus, das wie folgt gekennzeichnet ist:

Verfahren zur Extraktion von Deskriptoren,
vorzugsweise zur Darstellung von Druckvorlagen in Form
von größen- und drehlagenunabhängigen Bogenstrukturen zum
Zwecke einer Dokumentenanalyse, insbesondere zur Schriftzeichenerkennung, wobei das Dokument außer Textbereichen
auch Graphik- und/oder Bildbereiche enthalten kann, bei
dem die Vorlage optoelektronisch, vorzugsweise mittels
einer Videokamera, Abtastzeile für Abtastzeile, abgetastet wird, wonach die in analoger Form entstehenden, die
optoelektronische Abbildung der Vorlage repräsentierenden
Signale mittels eines Entscheidungsvorgangs jeweils entweder einer einen "Weißwert" repräsentierenden Binärzahl,
vorzugsweise "1", oder einer einen "Schwarzwert" repräsentierenden Binärzahl, vorzugsweise "0", zugeordnet werden,
wobei jeweils die Daten einer aktuellen und der unmittelbar vorhergehenden Abtastzeile zwischengespeichert werden,
wobei beim Abtasten einer neuen Zeile ein Vorwärtsrollen
für die beiden jeweils zwischengespeicherten Abtastzeilen
vorgenommen wird, wobei aus dem zwischengespeicherten
"zweizeiligen Bildsignal" Mustergrundtypen nach ihrer Art
und nach ihrer Lage bestimmt werden, wobei den bestimmten
Mustergrundtypen Bedeutungen, wie "Oberkante", "Unterkante",
"Sattel", "Verzweigung" und "Flanke" zugeordnet werden
und wobei die Deskriptoren als Stützwerte die Musterränder beschreiben, nämlich vorzugsweise an den Stellen, an
denen Tangenten mit Normalen in $0^o$-, $45^o$-, $90^o$-, $135^o$-
Richtung angelegt werden können, wobei die Deskriptoren
als Extremalpunkte des Randes bezüglich beliebig vorgegebener Tangentenrichtungen festgelegt werden, wobei jeder
Deskriptor als ein Tangentialpunkt des Randes bestimmt ist,
der auf einem Randabschnitt sitzt, welcher bezüglich der
vorgegebenen Tangentenrichtung parallel verläuft, wobei
der Verlauf eines Randes durch vier dem jeweiligen Rand
zugeordnete Listeneinträge gekennzeichnet wird, wobei die
betreffenden Listen die x-Koordinaten des Randes, Angaben
über den Randzustand, die momentane Länge der Kante, nämlich den Randabschnitt und eine Anschlußnummer enthalten,

0134997 E

wobei in diesen Listen bei den Mustergrundtypen "Oberkante" und "Verzweigung" die Einträge von Randzustand,
Kantenlänge und Anschlußnummer für die beiden zugehörigen
Ränder vorbelegt werden, wobei bei den Mustergrundtypen
"Unterkante" und "Sattel" die Listeneinträge der beiden
zugehörigen Ränder abgeschlossen und die noch fehlenden
Deskriptoren errechnet werden, wobei aus diesen Listen der
Anfang eines zu einer vorgegebenen Tangente parallelen
Randabschnittes festgestellt wird, wobei aus diesen Listen
die Fortführung des zur Tangente parallelen Randabschnittes festgestellt wird, wobei aus diesen Listen der Endpunkt eines zu einer vorgegebenen Tangente parallelen
Randabschnittes festgestellt wird, wobei für den Endpunkt
eines derartigen Randabschnittes aus dem Randzustand und
aus der Kantenlänge die genaue Deskriptoren-Position errechnet wird, wobei aus einer Anschlußnummernliste dem
betreffenden Deskriptor eine Strukturinformation zugeordnet wird, wobei bei einem Kantenende der Randzustand entsprechend den Deskriptorenzyklen neu festgelegt wird, wobei bei dem Kantenende die Kantenlänge neu, vorzugsweise
auf 1, festgelegt wird, wobei bei dem Kantenende eine weiterführende Anschlußnummer in eindeutiger Art neu festgelegt wird, wobei einem bestimmten Randzustand eine feste
Tangentenrichtung zugeordnet ist und wobei bei einem bestimmten Randzustand entlang des Randes nach einem bestimmten Deskriptor des konvexen Zyklus und gleichzeitig
nach einem bestimmten alternativen Deskriptor des konkaven Zyklus gesucht wird.

Erfindungsgemäß ist vorgesehen,
daß mit Hilfe der den Ergebnissen einer Textsegmentierung
zugeordneten Deskriptoren die Verlaufsrichtung der Textzeichen sowie die Schriftzeichengröße berechnet werden,
daß mittels der Deskriptoren, die jeweils einem vermuteten Textzeichen zugeordnet sind, das Vorhandensein oder
Nichtvorhandensein einer oder mehrerer Serifen geprüft
wird,
daß mittels der betreffenden Deskriptoren das Vorhanden- sein oder Nichtvorhandensein einer Schräglage des oder der
Aufstriche/Abstriche des betreffenden Textzeichens geprüft wird,
daß die Ergebnissignale der Serifen-Prüfung und der Schräglagen-Prüfung miteinander verarbeitet werden und
daß ein Entscheidungsprozeß zur Erzeugung von Aussage-Signalen, die Angaben über eine ermittelte Schriftart repräsentieren, durchgeführt wird.

Im einzelnen sieht die Erfindung zum Zwecke der Prüfung auf das Vorhandensein einer oder mehrerer Serifen bei einem vermuteten Textzeichen folgende Schritte vor;

1) Start des Prüfablaufs mit erforderlichen vorbereitenden Schritten nach dem Auffinden eines jeweils neuen
   Randes eines Prüfobjekts;

2) Rücksetzen eines Hilfsindex (IND) für einen Randdurchlauf auf einen ersten Deskriptor in dem betreffenden
   Rand sowie eines Randindex (IR), so daß IND = IR
   ist;

3) Rücksetzen eines Referenzindex (IFEF) auf einen ersten
   Deskriptor in einem Referenzmuster, wobei der Referenzindex (IREF) der Index der Einträge in dem Referenzmuster ist, der auf den gerade zu suchenden Deskriptor des Referenzmusters gerichtet ist;

4) Auslesen des von dem Referenzindex (IREF) bezeichneten Deskriptors aus dem Referenzmuster und Einlesen
   dieses Deskriptors in einen Suchspeicher (SA);

5) Vergleichen des Inhaltes des Suchspeichers (SA) mit
   dem betreffenden laufenden Deskriptor des Hilfsindex
   (IND);

6) Entscheiden, ob der Inhalt des Suchspeichers (SA)
   gleich dem laufenden Deskriptor des Randes ist, nämlich

V P A

83 P 1486 E
0134997

ob SA = D (IND) ist oder nicht gleich ist, und Erhöhen des Index (IND) auf den nächsten Deskriptor in dem betreffenden Rand für den Fall, daß die Entscheidung negativ ist, sowie erneutes Vergleichen des Inhaltes des Suchspeichers (SA) mit dem betreffenden laufenden Deskriptor (D(IND)) des Hilfsindex (IND);

7) für den Fall, daß die Bedingung SA = D (IND) erfüllt ist, also der betreffende Deskriptor gefunden ist, Eintragen seines Index in die betreffende Index-Registerstelle (IREF);

8) Entscheiden, ob die Index-Registerstelle (IREF) auf den ersten Deskriptor in dem Referenzmuster zeigt oder nicht zeigt;

9) wenn die Entscheidung positiv ausgefallen ist, Einspeichern des Wertes des Index (IND) in den Randindex (IR);

10) Erhöhen der Index-Registerstelle (IREF) entweder, nachdem die Entscheidung, ob die Index-Registerstelle (IREF) auf den ersten Deskriptor in dem Referenzmuster zeigt oder nicht zeigt, negativ ausgefallen ist oder, nachdem das Einspeichern des Wertes des Index (IND) in den Randindex (IR) erfolgt ist,

11) Entscheiden, ob die Index-Registerstelle (IREF) größer als die Länge des Referenzmusters ist oder nicht ist, wenn dies nicht der Fall ist, Auslesen des von dem Referenzindex (IREF) bezeichneten Deskriptors aus dem Referenzmuster, Einlesen dieses Deskriptors in den Suchspeicher (SA) und Durchführen der sich hieran anschließenden Schritte, und wenn dies der Fall ist,

12) Zuweisung der Referenzmuster-Deskriptoren beenden sowie Längen- und Winkelverhältnisse des beschriebenen Objektteils berechnen;

13) Vergleichen der Berechnungsergebnisse und der sich er-

0134997

gebenden Grenzindizes mit erlaubten Grenzwerten;

14) Durchführen einer Plausibilitätsprüfung mit den Fragen: "Ist hier eine Serife möglich?" und "Liegen die Werte innerhalb der erlaubten Grenzen?", wenn diese Plausibilitätsprüfung negativ ausfällt, Erhöhen des Randindex (IR) und Durchführen des sich hieran anschließenden Schritte, und wenn die Plausibilitätsprüfung positiv ausfällt,

15) Vergleichen der aktuellen Ergebnisdaten mit vorhergehenden Ergebnisdaten;

16) Prüfen, ob eine Überlappung der aktuellen Ergebnisdaten mit den vorhergehenden Ergebnisdaten gegeben ist oder nicht gegeben ist, für den Fall, daß die Prüfung negativ ausgefallen ist, Entscheiden, ob für die vorhergehende Serife eine vorgeschriebene Orientierung oder Lage in bezug auf die abgetastete Textzeile vorliegt oder nicht vorliegt, oder für den Fall, daß die Prüfung positiv ausgefallen ist, Entscheiden, ob die aktuellen Ergebnisdaten eine bessere Eignung als die vorhergehenden Ergebnisdaten zeigen oder nicht zeigen, für den Fall, daß die Entscheidung darüber, ob für die vorhergehende Serife eine vorgeschriebene Orientierung oder Lage in bezug auf die abgetastete Textzeile vorliegt oder nicht vorliegt, positiv ausgefallen ist,

17) Ausspeichern der vorhergehenden Ergebnisdaten zum Zwecke einer Merkmalsbildung;

18) nach diesem Ausspeichern oder für den Fall, daß die Entscheidung, ob für die vorhergehende Serife eine vorgeschriebene Orientierung oder Lage in bezug auf die abgetastete Textzeile vorliegt oder nicht vorliegt, negativ ausgefallen ist, oder für den Fall, daß die Entscheidung darüber, ob die aktuellen Ergebnisdaten eine bessere Eignung als die vorhergehenden Ergebnisdaten zeigen oder nicht zeigen, positiv ausgefallen ist, Ersetzen der vorhergehenden Parameter durch die aktuellen Parameter;

19) nach diesem Ersetzen oder für den Fall, daß die Entscheidung darüber, ob die aktuellen Ergebnisdaten eine bessere Eignung als die vorhergehenden Daten zeigen oder nicht zeigen, negativ ausgefallen ist, bzw. für den Fall, daß die Plausibilitätsprüfung negativ ausgefallen ist, Erhöhen des Randindex (IR) zum Bilden eines neuen Start-Deskriptors;

20) Entscheiden, ob das Randende überschritten worden ist oder nicht überschritten worden ist, für den Fall, daß diese Entscheidung negativ ausfällt, Übertragen des Inhaltes des Randindex (IR) auf den Hilfsindex (IND), so daß IND = IR ist, Rücksetzen des Referenzindex (IREF) auf den ersten Deskriptor in dem Referenzmuster und Durchführen der sich hieran anschließenden Schritte und, falls die Entscheidung positiv ausfällt, Starten bei einem neuen aufgefundenen Rand, vergl. Fig. 2.

Desweiteren sieht die Erfindung zum Zwecke der Prüfung des Vorhandenseins einer Schräglage der Aufstriche/Abstriche von gefundenen Textzeichen folgende Schritte vor:

1) Starten des Prüfablaufs und Bereitstellen der erforderlichen Daten;

2) Rücksetzen eines Hilfsindex (IND) für einen Randdurchlauf auf einen ersten Deskriptor in dem betreffenden Rand sowie eines Randes (IR), so daß IND = IR ist;

3) Rücksetzen eines Referenzindex (IREF) auf einen ersten Deskriptor in einem Referenzmuster;

4) Entscheiden, ob der Referenzindex (IREF) auf den ersten Deskriptor in dem Referenzmuster zeigt oder nicht zeigt und für den Fall, daß diese Entscheidung positiv ausfällt,

5) Einspeichern des Wertes des Index (IND) in den Randindex (IR);

6) für den Fall, daß die vorhergehende Entscheidung negativ
ausgefallen ist oder für den Fall, daß das Einspeichern
des Wertes des Index (IND) in den Randindex (IR) erfolgt
ist, Berechnen von Linienparametern;

7) Erhöhen des Referenzindex (IREF) auf den nächsten Referenzmuster-Eintrag;

8) Entscheiden, ob alle Deskriptoren zwischen dem ersten
Deskriptor und dem Deskriptor D(IREF-1) in einer Geraden
liegen oder nicht liegen, für den Fall, daß diese Entscheidung positiv ausfällt, erneut Entscheiden, ob der
Referenzindex (IREF) auf den ersten Deskriptor in dem
Referenzmuster zeigt oder nicht zeigt, und Durchführen
der sich hieran anschließenden Schritte, oder falls die
gerade zu treffende Entscheidung negativ ausfällt,

9) Zuweisen von Deskriptoren zum Indexregister beenden und
Rücksetzen des Referenzindex-Registers auf den zuvor erreichten Wert, nämlich IREF = IREF-1;

10) Berechnen der Längen- und Winkelverhältnisse der gefundenen Geraden;

11) Prüfen, ob vorgegebene Regeln bezüglich der Linienlänge
und der erlaubten Abweichungswerte erfüllt sind;

12) Entscheiden, ob folgende Fragen zu bejahen oder zu verneinen sind: "Gerade möglich?" und "Werte innerhalb vorgegebener Grenzen?", für den Fall, daß diese Fragen negativ beantwortet werden, Erhöhen des Randindex (IR) zum Bestimmen eines neuen Start-Deskriptors und Durchführen der sich hieran anschließenden Schritte, falls die Antwort positiv ausfällt,

13) Vergleichen der aktuellen Ergebnisdaten mit vorhergehenden Ergebnisdaten,

14) Entscheiden, ob eine Überlappung der aktuellen Ergebnisdaten mit den vorhergehenden Ergebnisdaten vorliegt oder nicht vorliegt, für den Fall, daß diese Entscheidung positiv ausgefallen ist, Entscheiden, ob die aktuellen Ergebnisdaten eine bessere Eignung als die vorhergehenden Ergebnisdaten aufweisen oder nicht aufweisen, jedoch für den Fall, daß die Entscheidung darüber, ob eine Überlappung der aktuellen Ergebnisdaten mit den vorhergehenden Ergebnisdaten vorliegt oder nicht vorliegt, negativ ausgefallen ist,

15) Entscheiden, ob die vorhergehenden Ergebnisdaten eine Gerade in einem vorgeschriebenen Winkelbereich bezogen auf die abgetastete Textzeile repräsentieren oder nicht repräsentieren, für den Fall, daß diese Entscheidung positiv ausgefallen ist,

16) Ausspeichern der vorhergehenden Ergebnisdaten zum Zwecke einer Merkmalsbildung;

17) nach dem Ausspeichern oder für den Fall, daß die Entscheidung darüber, ob die aktuellen Ergebnisdaten eine bessere Eignung als die vorhergehenden Ergebnisdaten aufweisen oder nicht aufweisen, positiv ausgefallen ist, oder für den Fall, daß die Entscheidung darüber, ob die vorhergehenden Ergebnisdaten eine Gerade in einem vorgeschriebenen Winkelbereich bezogen auf die abgetastete Textzeile repräsentieren oder nicht repräsentieren, negativ ausgefallen ist, Ersetzen der vorhergehenden Parameter durch die aktuellen Parameter;

18) nach dem Ersetzen oder für den Fall, daß die Entscheidung darüber, ob die aktuellen Ergebnisdaten eine bessere Eignung als die vorhergehenden Ergebnisdaten aufweisen oder nicht aufweisen, Erhöhen des Randindex (IR) zur Einstellung eines neuen Start-Deskriptors;

19) Entscheiden, ob das Randende überschritten worden ist oder nicht überschritten worden ist, für den Fall, daß diese Entscheidung negativ ausfällt, Übertragen des Inhaltes des Randindex (IR) auf den Hilfsindex (IND), so daß IND = IR ist, Rücksetzen des Referenzindex (IREF) auf den ersten Deskriptor in dem Referenzmuster und Durchführen der sich hieran anschließenden Schritte, oder für den Fall, daß die Entscheidung positiv ausfällt, Starten eines neuen Prüfvorgangs bei einem neuen Rand, vergl. Fig. 3.

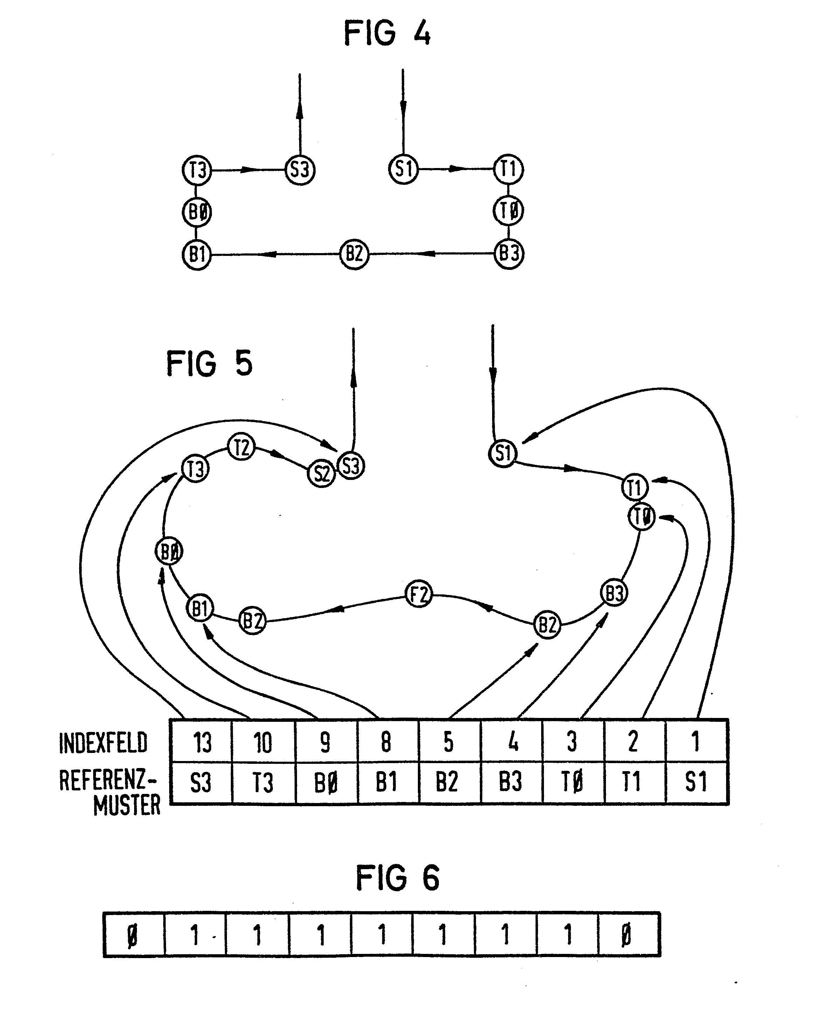

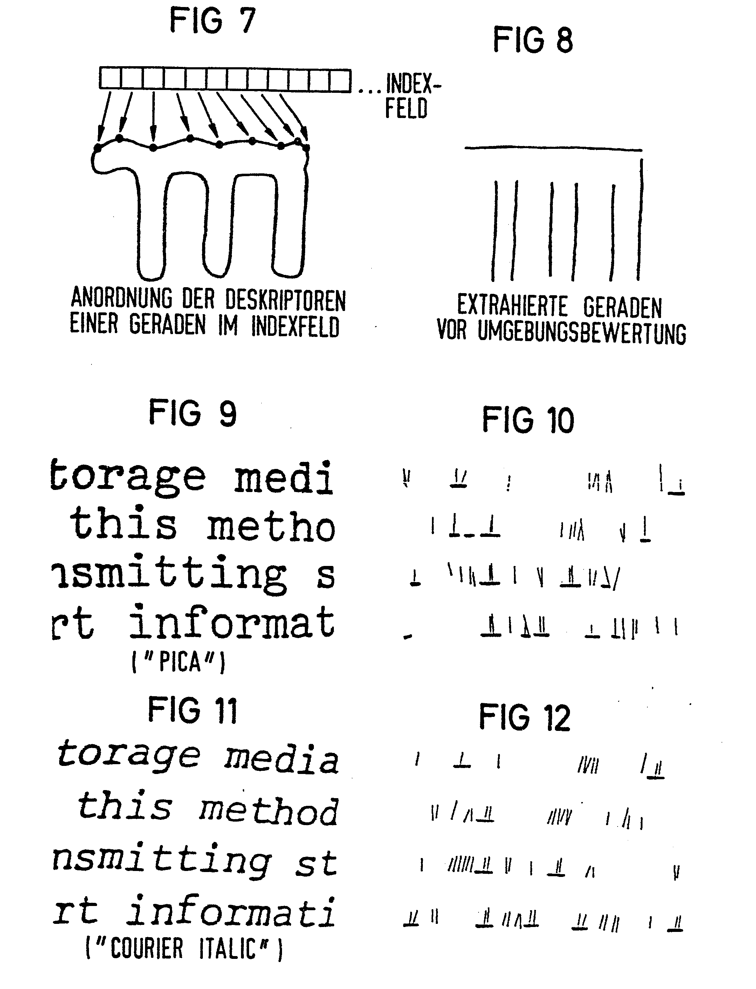

Wie bereits erläutert, zeigt Fig. 4 eine Deskriptor-Konfiguration für eine ideale Serife. Fig. 5 zeigt ein ideales Deskriptor-Modell einer Serife (Referenzmuster) sowie eine Zuordnung zu den Deskriptoren einer realen, gestörten Serife. Fig. 6 zeigt ein sog. drehfreies Deskriptormodell einer Serife. Fig. 7 zeigt die Zuordnung der Deskriptoren einer Geraden zu einem Indexfeld. Fig. 8 zeigt extrahierte Geraden vor einer Umgebungsbewertung.

Fig. 9 zeigt eine auszugsweise Darstellung eines in der Schriftart "Pica" gedruckten oder maschinegeschriebenen Textes. Fig. 10 zeigt eine Darstellung der durch das Verfahren aus dem Textauszug gemäß Fig. 9 ermittelten Serifen und der aufrechten Geraden. Fig. 11 zeigt eine auszugsweise Darstellung eines in der Schriftart "Courier-Italic" gedruckten oder maschinegeschriebenen Textes. Fig. 12 zeigt eine Darstellung der durch das Verfahren aus dem Textauszug gemäß Fig. 11 ermittelten Serifen und der aufrechten Geraden. Fig. 13 zeigt eine auszugsweise Darstellung eines in der Schriftart "Letter Gothic" gedruckten oder maschinegeschriebenen Textes. Fig. 14 zeigt schließlich eine Darstellung der durch das Verfahren aus dem Textauszug gemäß Fig. 13 ermittelten aufrechten Geraden.

3 Patentansprüche
14 Figuren

0134997

VPA 83 P 1486 E

Patentansprüche:

1. Verfahren zur automatischen Schriftarterkennung ohne Vorwissen über den Textinhalt mit Hilfe einer Beschreibung der Textvorlage durch Deskriptoren unter Zuhilfenahme eines Verfahrens zur Extraktion von Deskriptoren, vorzugsweise zur Darstellung von Druckvorlagen in Form von größen- und drehlagenunabhängigen Bogenstrukturen zum Zwecke einer Dokumentenanalyse, insbesondere zur Schriftzeichenerkennung, wobei das Dokument außer Textbereichen auch Graphik- und/oder Bildbereiche enthalten kann, bei dem die Vorlage optoelektronisch, vorzugsweise mittels einer Videokamera, Abtastzeile für Abtastzeile, abgetastet wird, wonach die in analoger Form entstehenden, die optoelektronische Abbildung der Vorlage repräsentierenden Signale mittels eines Entscheidungsvorgangs jeweils entweder einer einen "Weißwert" repräsentierenden Binärzahl, vorzugsweise "1", oder einer einen "Schwarzwert" repräsentierenden Binärzahl, vorzugsweise "0", zugeordnet werden, wobei jeweils die Daten einer aktuellen und der unmittelbar vorhergehenden Abtastzeile zwischengespeichert werden, wobei beim Abtasten einer neuen Zeile ein Vorwärtsrollen für die beiden jeweils zwischengespeicherten Abtastzeilen vorgenommen wird, wobei aus dem zwischengespeicherten "zweizeiligen Bildsignal" Mustergrundtypen nach ihrer Art und nach ihrer Lage bestimmt werden, wobei den bestimmten Mustergrundtypen Bedeutungen, wie "Oberkante", "Unterkante", "Sattel", "Verzweigung" und "Flanke" zugeordnet werden und wobei die Deskriptoren als Stützwerte die Musterränder beschreiben, nämlich vorzugsweise an den Stellen, an denen Tangenten mit Normalen in 0°-, 45°-, 90°-, 135°-Richtung angelegt werden können, wobei die Deskriptoren als Extremalpunkte des Randes bezüglich beliebig vorgegebener Tangentenrichtungen festgelegt werden, wobei jeder Deskriptor als ein Tangentialpunkt des Randes bestimmt ist, der auf einem Randabschnitt sitzt, welcher bezüglich der vorgegebenen Tangentenrichtung parallel verläuft, wobei der Verlauf eines Randes durch vier dem jeweiligen Rand zugeordnete Listeneinträge gekennzeichnet wird, wobei die betreffenden Listen die x-Koordinaten des Randes, Angaben über den Randzustand, die momentane Länge der Kante, nämlich den Randabschnitt und eine Anschlußnummer enthalten, wobei in diesen Listen bei den Mustergrundtypen "Oberkante" und "Verzweigung" die Einträge von Randzustand, Kantenlänge und Anschlußnummer für die beiden zugehörigen Ränder vorbelegt werden, wobei bei den Mustergrundtypen "Unterkante" und "Sattel" die Listeneinträge der beiden zugehörigen Ränder abgeschlossen und die noch fehlenden Deskriptoren errechnet werden, wobei aus diesen Listen der Anfang eines zu einer vorgegebenen Tangente parallelen Randabschnittes festgestellt wird, wobei aus diesen Listen die Fortführung des zur Tangente parallelen Randabschnittes festgestellt wird, wobei aus diesen Listen der Endpunkt eines zu einer vorgegebenen Tangente parallelen Randabschnittes festgestellt wird, wobei für den Endpunkt eines derartigen Randabschnittes aus dem Randzustand und aus der Kantenlänge die genaue Deskriptoren-Position errechnet wird, wobei aus einer Anschlußnummernliste dem betreffenden Deskriptor eine Strukturinformation zugeordnet wird, wobei bei einem Kantenende der Randzustand entsprechend den Deskriptorenzyklen neu festgelegt wird, wobei bei dem Kantenende die Kantenlänge neu, vorzugsweise auf 1, festgelegt wird, wobei bei dem Kantenende eine weiterführende Anschlußnummer in eindeutiger Art neu festgelegt wird, wobei einem bestimmten Randzustand eine feste Tangentenrichtung zugeordnet ist und wobei bei einem bestimmten Randzustand entlang des Randes nach einem bestimmten Deskriptor des konvexen Zyklus und gleichzeitig
nach einem bestimmten alternativen Deskriptor des konkaven Zyklus gesucht wird, nach Patentanmeldung P 32 38 706,
dadurch g e k e n n z e i c h n e t ,
daß mit Hilfe der den Ergebnissen einer Textsegmentierung
zugeordneten Deskriptoren die Verlaufsrichtung der Textzeichen sowie die Schriftzeichengröße berechnet werden,
daß mittels der Deskriptoren, die jeweils einem vermuteten Textzeichen zugeordnet sind, das Vorhandensein oder
Nichtvorhandensein einer oder mehrerer Serifen geprüft
wird,
daß mittels der betreffenden Deskriptoren das Vorhandensein oder Nichtvorhandensein einer Schräglage des oder der
Aufstriche/Abstriche des betreffenden Textzeichens geprüft wird,
daß die Ergebnissignale der Serifen-Prüfung und der Schräglagen-Prüfung miteinander verarbeitet werden und
daß ein Entscheidungsprozeß zur Erzeugung von Aussage-Signalen, die Angaben über eine ermittelte Schriftart repräsentieren, durchgeführt wird.

2. Verfahren nach Anspruch 1, dadurch g e k e n n -
z e i c h n e t , daß zum Zwecke der Prüfung auf das Vorhandensein einer oder mehrerer Serifen bei einem vermuteten Textzeichen folgende Schritte vorgesehen sind:

1) Start des Prüfablaufs mit erforderlichen vorbereitenden Schritten nach dem Auffinden eines jeweils neuen
   Randes eines Prüfobjekts;

2) Rücksetzen eines Hilfsindex (IND) für einen Randdurchlauf auf einen ersten Deskriptor in dem betreffenden

0134997
VPA 83 P 1486

Rand sowie eines Randindex (IR), so daß IND = IR ist;

3) Rücksetzen eines Referenzindex (IFEF) auf einen ersten Deskriptor in einem Referenzmuster, wobei der Referenzindex (IREF) der Index der Einträge in dem Referenzmuster ist, der auf den gerade zu suchenden Deskriptor des Referenzmusters gerichtet ist;

4) Auslesen des von dem Referenzindex (IREF) bezeichneten Deskriptors aus dem Referenzmuster und Einlesen dieses Deskriptors in einen Suchspeicher (SA);

5) Vergleichen des Inhaltes des Suchspeichers (SA) mit dem betreffenden laufenden Deskriptor des Hilfsindex (IND);

6) Entscheiden, ob der Inhalt des Suchspeichers (SA) gleich dem laufenden Deskriptor des Randes ist, nämlich ob SA = D (IND) ist oder nicht gleich ist, und Erhöhen des Index (IND) auf den nächsten Deskriptor in dem betreffenden Rand für den Fall, daß die Entscheidung negativ ist, sowie erneutes Vergleichen des Inhaltes des Suchspeichers (SA) mit dem betreffenden laufenden Deskriptor (D(IND)) des Hilfsindex (IND);

7) für den Fall, daß die Bedingung SA = D (IND) erfüllt ist, also der betreffende Deskriptor gefunden ist, Eintragen seines Index in die betreffende Index-Registerstelle (IREF);

8) Entscheiden, ob die Index-Registerstelle (IREF) auf den ersten Deskriptor in dem Referenzmuster zeigt oder nicht zeigt;

9) wenn die Entscheidung positiv ausgefallen ist, Einspeichern des Wertes des Index (IND) in den Randindex
(IR);

10) Erhöhen der Index-Registerstelle (IREF) entweder, nachdem die Entscheidung, ob die Index-Registerstelle (IREF)
auf den ersten Deskriptor in dem Referenzmuster zeigt
oder nicht zeigt, negativ ausgefallen ist oder, nachdem das Einspeichern des Wertes des Index (IND) in den
Randindex (IR) erfolgt ist,

11) Entscheiden, ob die Index-Registerstelle (IREF) größer
als die Länge des Referenzmusters ist oder nicht ist,
wenn dies nicht der Fall ist, Auslesen des von dem Referenzindex (IREF) bezeichneten Deskriptors aus dem
Referenzmuster, Einlesen dieses Deskriptors in den Suchspeicher (SA) und Durchführen der sich hieran anschließenden Schritte, und wenn dies der Fall ist,

12) Zuweisung der Referenzmuster-Deskriptoren beenden sowie Längen- und Winkelverhältnisse des beschriebenen
Objektteils berechnen;

13) Vergleichen der Berechnungsergebnisse und der sich ergebenden Grenzindizes mit erlaubten Grenzwerten;

14) Durchführen einer Plausibilitätsprüfung mit den Fragen: "Ist hier eine Serife möglich?" und "Liegen die
Werte innerhalb der erlaubten Grenzen?", wenn diese
Plausibilitätsprüfung negativ ausfällt, Erhöhen des
Randindex (IR) und Durchführen des sich hieran anschließenden Schritte, und wenn die Plausibilitätsprüfung
positiv ausfällt,

15) Vergleichen der aktuellen Ergebnisdaten mit vorhergehenden Ergebnisdaten;

16) Prüfen, ob eine Überlappung der aktuellen Ergebnisdaten mit den vorhergehenden Ergebnisdaten gegeben ist oder nicht gegeben ist, für den Fall, daß die Prüfung negativ ausgefallen ist, Entscheiden, ob für die vorhergehende Serife eine vorgeschriebene Orientierung oder Lage in bezug auf die abgetastete Textzeile vorliegt oder nicht vorliegt, oder für den Fall, daß die Prüfung positiv ausgefallen ist, Entscheiden, ob die aktuellen Ergebnisdaten eine bessere Eignung als die vorhergehenden Ergebnisdaten zeigen oder nicht zeigen, für den Fall, daß die Entscheidung darüber, ob für die vorhergehende Serife eine vorgeschriebene Orientierung oder Lage in bezug auf die abgetastete Textzeile vorliegt oder nicht vorliegt, positiv ausgefallen ist,

17) Ausspeichern der vorhergehenden Ergebnisdaten zum Zwecke einer Merkmalsbildung;

18) nach diesem Ausspeichern oder für den Fall, daß die Entscheidung, ob für die vorhergehende Serife eine vorgeschriebene Orientierung oder Lage in bezug auf die abgetastete Textzeile vorliegt oder nicht vorliegt, negativ ausgefallen ist, oder für den Fall, daß die Entscheidung darüber, ob die aktuellen Ergebnisdaten eine bessere Eignung als die vorhergehenden Ergebnisdaten zeigen oder nicht zeigen, positiv ausgefallen ist, Ersetzen der vorhergehenden Parameter durch die aktuellen Parameter;

19) nach diesem Ersetzen oder für den Fall, daß die Entscheidung darüber, ob die aktuellen Ergebnisdaten eine bessere Eignung als die vorhergehenden Daten zeigen
oder nicht zeigen, negativ ausgefallen ist, bzw. für
den Fall, daß die Plausibilitätsprüfung negativ ausgefallen ist, Erhöhen des Randindex (IR) zum Bilden eines
neuen Start-Deskriptors;

20) Entscheiden, ob das Randende überschritten worden ist
oder nicht überschritten worden ist, für den Fall, daß
diese Entscheidung negativ ausfällt, Übertragen des Inhaltes des Randindex (IR) auf den Hilfsindex (IND), so
daß IND = IR ist, Rücksetzen des Referenzindex (IREF)
auf den ersten Deskriptor in dem Referenzmuster und
Durchführen der sich hieran anschließenden Schritte und,
falls die Entscheidung positiv ausfällt, Starten bei
einem neuen aufgefundenen Rand.

3. Verfahren nach Anspruch 1, dadurch  g e k e n n -
z e i c h n e t , daß zum Zwecke der Prüfung des Vorhandenseins einer Schräglage der Aufstriche/Abstriche von gefundenen Textzeichen folgende Schritte vorgesehen sind:

1) Starten des Prüfablaufs und Bereitstellen der erforderlichen Daten;

2) Rücksetzen eines Hilfsindex (IND) für einen Randdurchlauf auf einen ersten Deskriptor in dem betreffenden
Rand sowie eines Randes (IR), so daß IND = IR ist;

3) Rücksetzen eines Referenzindex (IREF) auf einen ersten
Deskriptor in einem Referenzmuster;

4) Entscheiden, ob der Referenzindex (IREF) auf den ersten
Deskriptor in dem Referenzmuster zeigt oder nicht zeigt und für den Fall, daß diese Entscheidung positiv ausfällt,

5) Einspeichern des Wertes des Index (IND) in den Randindex (IR);

6) für den Fall, daß die vorhergehende Entscheidung negativ
ausgefallen ist oder für den Fall, daß das Einspeichern
des Wertes des Index (IND) in den Randindex (IR) erfolgt
ist, Berechnen von Linienparametern;

7) Erhöhen des Referenzindex (IREF) auf den nächsten Referenzmuster-Eintrag;

8) Entscheiden, ob alle Deskriptoren zwischen dem ersten
Deskriptor und dem Deskriptor D(IREF-1) in einer Geraden
liegen oder nicht liegen, für den Fall, daß diese Entscheidung positiv ausfällt, erneut Entscheiden, ob der
Referenzindex (IREF) auf den ersten Deskriptor in dem
Referenzmuster zeigt oder nicht zeigt, und Durchführen
der sich hieran anschließenden Schritte, oder falls die
gerade zu treffende Entscheidung negativ ausfällt,

9) Zuweisen von Deskriptoren zum Indexregister beenden und
Rücksetzen des Referenzindex-Registers auf den zuvor erreichten Wert, nämlich IREF = IREF-1;

10) Berechnen der Längen- und Winkelverhältnisse der gefundenen Geraden;

11) Prüfen, ob vorgegebene Regeln bezüglich der Linienlänge
und der erlaubten Abweichungswerte erfüllt sind;

12) Entscheiden, ob folgende Fragen zu bejahen oder zu verneinen sind:  "Gerade möglich?" und "Werte innerhalb vorgegebener Grenzen?", für den Fall, daß diese Fragen negativ beantwortet werden, Erhöhen des Randindex (IR) zum Bestimmen eines neuen Start-Deskriptors und Durchführen der sich hieran anschließenden Schritte, falls die Antwort positiv ausfällt,

13) Vergleichen der aktuellen Ergebnisdaten mit vorhergehenden Ergebnisdaten,

14) Entscheiden, ob eine Überlappung der aktuellen Ergebnisdaten mit den vorhergehenden Ergebnisdaten vorliegt oder nicht vorliegt, für den Fall, daß diese Entscheidung positiv ausgefallen ist, Entscheiden, ob die aktuellen Ergebnisdaten eine bessere Eignung als die vorhergehenden Ergebnisdaten aufweisen oder nicht aufweisen, jedoch für den Fall, daß die Entscheidung darüber, ob eine Überlappung der aktuellen Ergebnisdaten mit den vorhergehenden Ergebnisdaten vorliegt oder nicht vorliegt, negativ ausgefallen ist,

15) Entscheiden, ob die vorhergehenden Ergebnisdaten eine Gerade in einem vorgeschriebenen Winkelbereich bezogen auf die abgetastete Textzeile repräsentieren oder nicht repräsentieren, für den Fall, daß diese Entscheidung positiv ausgefallen ist,

16) Ausspeichern der vorhergehenden Ergebnisdaten zum Zwecke einer Merkmalsbildung;

17) nach dem Ausspeichern oder für den Fall, daß die Entscheidung darüber, ob die aktuellen Ergebnisdaten

0134997

VPA 83 P 1 4 8 6 E

eine bessere Eignung als die vorhergehenden Ergebnisdaten aufweisen oder nicht aufweisen, positiv ausgefallen ist, oder für den Fall, daß die Entscheidung darüber, ob die vorhergehenden Ergebnisdaten eine Gerade in einem vorgeschriebenen Winkelbereich bezogen auf die abgetastete Textzeile repräsentieren oder nicht repräsentieren, negativ ausgefallen ist, Ersetzen der vorhergehenden Parameter durch die aktuellen Parameter;

18) nach dem Ersetzen oder für den Fall, daß die Entscheidung darüber, ob die aktuellen Ergebnisdaten eine bessere Eignung als die vorhergehenden Ergebnisdaten aufweisen oder nicht aufweisen, Erhöhen des Randindex (IR) zur Einstellung eines neuen Start-Deskriptors;

19) Entscheiden, ob das Randende überschritten worden ist oder nicht überschritten worden ist, für den Fall, daß diese Entscheidung negativ ausfällt, Übertragen des Inhaltes des Randindex (IR) auf den Hilfsindex (IND), so daß IND = IR ist, Rücksetzen des Referenzindex (IREF) auf den ersten Deskriptor in dem Referenzmuster und Durchführen der sich hieran anschließenden Schritte, oder für den Fall, daß die Entscheidung positiv ausfällt, Starten eines neuen Prüfvorgangs bei einem neuen Rand.

## FIG 1

```
START
  │
EXTRAKTION
   VON
DESKRIPTOREN
  │
  ├──────────────────────┐
SERIFEN-              SCHRÄGLAGEN-
SUCHE                    SUCHE
(FIG 2)                 (FIG 3)
  └──────────────────────┘
  │
VERARBEITUNG DER
ERGEBNISDATEN
BEST. SCHRIFTART
  │
STOP
```

## FIG 13

torage media.
 this method
nsmitting sto
rt informatio

("LETTER GOTHIC")

## FIG 14

FIG 2 (SERIFEN - SUCHE)

0134997

2/5

FIG 3 (SCHRÄGLAGEN - SUCHE)

4/5

0134997

## FIG 4

## FIG 5

| INDEXFELD | 13 | 10 | 9 | 8 | 5 | 4 | 3 | 2 | 1 |
|---|---|---|---|---|---|---|---|---|---|
| REFERENZ-MUSTER | S3 | T3 | BØ | B1 | B2 | B3 | TØ | T1 | S1 |

## FIG 6

| Ø | 1 | 1 | 1 | 1 | 1 | 1 | 1 | Ø |
|---|---|---|---|---|---|---|---|---|

## FIG 7

... INDEX-FELD

ANORDNUNG DER DESKRIPTOREN
EINER GERADEN IM INDEXFELD

## FIG 8

EXTRAHIERTE GERADEN
VOR UMGEBUNGSBEWERTUNG

## FIG 9

torage medi
this metho
1smitting s
rt informat

("PICA")

## FIG 10

## FIG 11

torage media
this method
nsmitting st
rt informati

("COURIER ITALIC")

## FIG 12